# EUROPEAN PATENT SPECIFICATION

(11) **EP 1 216 264 B1**
(45) Date of publication and mention of the grant of the patent: **17.09.2003**
(21) Application number: 00949450.1
(22) Date of filing: 03.08.2000
(51) Int. Cl.: C08G 18/48

(54) **POLYOL FORMULATION**
POLYOLFORMULIERUNG
FORMULATION POLYOL

(30) Priority: 07.09.1999 EP 99202916
(43) Date of publication of application: 26.06.2002
(73) Proprietor: SHELL INTERNATIONALE RESEARCH MAATSCHAPPIJ B.V., 2596 HR Den Haag (NL)
(72) Inventor: ZARKA, Philippe, Etienne, B-1348 Ottignies, Louvain-la-Neuve (BE); KELLNER, Juergen, B-1348 Ottignies, Louvain-la-Neuve (BE)
(74) Representative: Swinnen, Anne-Marie
(86) International application number: EP0007538
(87) International publication number: WO01018087

(56) References cited:
- EP-A- 0 567 027
- WO-A-99/20672
- FR-A- 2 359 862
- US-A- 4 568 702

## Description

This invention relates to a polyol formulation and to a method of preparing a polyurethane foam using such a formulation.

Semi-flexible polyurethane foams having a virtually closed-cell structure (closed cell content typically exceeds 90%) are currently used for insulating semi-flexible pipes which may be used in heating systems or simply for the transport of hot liquids.

Several advantages are associated with the production and use of semi-flexible pipes. For example, a substantially continuous process can be used in the production of the pipes, thereby allowing high production rates and a reduction in the amounts of raw materials used, since almost no overpack is required to fill the pipes. Additionally, the flexibility of the pipes enables them to be rolled up on a coil which facilitates transport and installation. Furthermore, longer pieces of pipe can be installed on-site which reduces the number of joints required to interconnect pipes.

The foams used in pipes should, in addition to meeting flexibility requirements, have other appropriate mechanical properties and be able to withstand relatively high temperatures. For operating temperatures up to 95 °C, it is possible to use polyethylene inner pipes having foam systems with a low heat resistance. However when operating temperatures above 120 °C are used, metal inner pipes of, for example, copper, corrugated steel or chrome-nickel are used, which require adapted foam systems. It is desirable for foam manufacturers to make one foam which can meet both heat resistance requirements described.

The use of mixtures of polyols having different properties for making semi-flexible polyurethane foams is known in the art. In International application WO-A-99/20672 polyol blends are described comprising 20 to 65 wt% of polyol of a flexible polyol having a number average molecular weight of greater than 800, a hydroxyl value of less than 200 mg KOH/g and an ethylene oxide content of less than 75 wt% and, forming a miscible mixture therewith, 35 to 80 wt% of a rigid polyol having a number average molecular weight of less than 1000, a hydroxyl value of greater than 300 mg KOH/g and an amine content (expressed in terms of the percentage of N) of at least 0.2 wt%.

Although the polyol blends described in WO-A-99/20672 have excellent heat resistance and flexibility properties, it was found that there was still some room for improvement with respect to the increase of thermal conductivity in time. Namely, the thermal conductivity of an insulating polyurethane foam will always increase in time. The rate at which this increase takes place should preferably be as low as possible, so that the insulating properties of the foam remain optimal for a long period of time. Accordingly, a main purpose of the present invention was to develop a polyol formulation resulting in a semi-flexible foam, wherein the aforesaid increase of thermal conductivity in time is delayed as much as possible. Furthermore, it was aimed to develop a polyol formulation, which would result in a semi-flexible foam having at least the same excellent flexibility and insulating properties as the foam resulting from the formulation disclosed in WO-A-99/20672.

It was found that these objectives can be effectively realised by selecting a specific group of flexible polyols to be used in specific amounts.

Accordingly, in a first aspect the present invention relates to a polyol formulation comprising 30 to 55 wt% of a polyol of a flexible type (hereinafter "said flexible polyol") having a number average molecular weight in the range of from 1100 to 3800, a hydroxyl value in the range of from 60 to 120 mg KOH/g and an ethylene oxide content of less than 75 wt% and 45 to 70 wt% of a polyol of a rigid type (hereinafter "said rigid polyol") having a number average molecular weight of less than 1000 and a hydroxyl value of greater than 300 mg KOH/g.

Said flexible polyol may have a molecular weight of greater than 1200, preferably greater than 1300, especially greater than 1400. Suitably, said flexible polyol has a molecular weight of less than 3500, preferably less than 3000, more preferably less than 2800, especially less than 2500.

Suitably, said flexible polyol has a hydroxyl value of less than 115, preferably less than 110 mg KOH/g. Suitably, said flexible polyol has a hydroxyl value of at least 65, preferably at least 70 mg KOH/g. A flexible polyol having a hydroxyl value in the range of 60 to 110 mg KOH/g is preferred.

The functionality of a polyol is defined as the average number of hydroxyl groups per molecule of polyol. Suitably, said flexible polyol has a functionality of at least 2.2, preferably at least 2.3, more preferably at least 2.4, especially at least 2.5. Suitably, said flexible polyol has a functionality of 4 or less, preferably 3.5 or less, especially 3.2 or less.

The ethylene oxide content by weight in said flexible polyol may be at least 5%, preferably at least 8%, more preferably at least 10%, especially at least 12%. Said ethylene oxide content in said flexible polyol may be less than 60%, suitably less than 50%, preferably less than 40%, more preferably less than 30%, especially 20% or less. The remainder of the alkylene oxide content of said flexible polyol may be provided by propylene oxide. Thus, preferably, said flexible polyol is a poly(oxyalkylene) polyether polyol, more in particular an ethylene oxide and/or propylene oxide adduct.

Ethylene oxide can be incorporated in any fashion along the polymer chain of said flexible polyol, for example as internal blocks, terminal blocks or randomly distributed.

Said flexible polyol may comprise a polymer polyol which is a dispersion of a solid polymer in a liquid base polyol. The base polyol may have any feature of said flexible polyol described in any statement herein. Where a reference is made herein to the wt% of a flexible polyol in the formulation, the wt% refers to the amount of base polyol when a polymer polyol is used.

The polymer dispersed in the base polyol, may in principle be any such polymer known to be applicable for this purpose. Thus, suitable polymers include the polymers based on ethylenically unsaturated monomers and particularly polymers of vinyl aromatic hydrocarbons, like styrene, alpha-methyl styrene, methyl styrene and various other alkylsubstituted styrenes. Of these, the use of styrene is preferred. The vinyl aromatic monomer may be used alone or in combination with other ethylenically unsaturated monomers, such as acrylonitrile, methacrylonitrile, vinylidene chloride, various acrylates and conjugated dienes like 1,3-butadiene and isoprene. Preferred polymers, however, are polystyrene and styrene-acrylonitrile (SAN) copolymers. Another suitable class of polymers are the polyurea and polyurethane polymers. Particularly the condensation products of primary amines or polyhydric alcohol amines and aromatic diisocyanates are very useful in this respect. A very much preferred polymer is the condensation product of triethanolamine and toluene diisocyanate (TDI). The dispersed polymer is suitably present in an amount of from 5 to 50% by weight based on total weight of polymer polyol. In case the polymer is polystyrene or SAN polymer, preferred solids amounts are in the range of from 5 to 35% by weight, whilst in case of polyurea polyurethane polymers the preferred amount of polymer is from 5 and 20% by weight.

Preferably, said rigid polyol has a molecular weight of greater than 100, preferably greater than 200. Said molecular weight is suitably less than 900, is preferably less than 750 and is more preferably 500 or less. A preferred range is 200 to 900.

Suitably, said rigid polyol has a hydroxyl value of at least 300, preferably at least 400, more preferably at least 450 mg KOH/g. Said hydroxyl value may be less than 750, preferably less than 700, more preferably 650 mg KOH/g or less.

The amine content of said rigid polyol (expressed in terms of the percentage of nitrogen in the polyol) is not particularly critical for the purpose of the present invention. Accordingly, it may be as low as 0 wt%. However, it was found beneficial that said rigid polyol has an amine content of at least 0.2 wt%, suitably at least 0.5 wt%, preferably at least 1 wt%, more preferably at least 2 wt%, and especially at least 3 wt%. In this way the miscibility of flexible and rigid polyol is improved, thus enabling the preparation of a miscible blend of flexible and rigid polyol, which is also storage stable. However, in order to obtain the effect of a retarded increase of thermal conductivity, the miscibility is not essential. The amine content may be less than 15 wt%, preferably less than 12 wt%, more preferably 8 wt% or less.

The aromaticity (or aromatic content) of said rigid polyol may be in the range 0 to 30%, preferably in the range 5 to 25%, more preferably in the range 10 to 20%.

Aromaticity refers to the weight percentage of aromatic carbon atoms, i.e. carbon atoms contained in an aromatic ring structure, present in a compound or formulation relative to the total weight of that compound or formulation.

The alkylene oxide in said rigid polyol may be propylene oxide alone or propylene oxide in combination with ethylene oxide.

Said flexible and/or said rigid polyols may comprise a blend of polyols or a dilution of polyols, in which case the characterising features of the flexible and rigid polyols described herein (e.g. the wt%, hydroxyl values, molecular weights, functionalities and ethylene oxide content) refer to average values for the blend or dilution, rather than to values for, for example, individual polymers in a blend.

Preferably, said polyol formulation comprises 35 to 50 wt% of said flexible polyol and, up to a total of 100 wt%, from 50 to 65 wt% of said rigid polyol.

The polyol formulation may contain additional components and auxiliaries useful in the production of rigid and flexible polyurethane foams. For instance, the polyol formulation could additionally comprise a foaming catalyst and/or a cross-linking agent for example glycerol and/or a chain extender for example 1,4-butanediol. Auxiliaries like fillers, flame retardants, foam stabilisers, blowing agents and colourants may be present as well.

Conveniently, the polyol formulation further comprises ("php" refers to the amount in parts by weight per 100 parts by weight of the flexible and rigid polyols): (a) 0 to 8 php of one or more polyurethane catalysts; and (b) 0 to 10.0 php, suitably 0.5 to 5.0 php of a cross-linking agent.

Polyurethane catalysts are known in the art and include many different compounds. An extensive list of polyurethane catalysts is, for instance, given in U.S. Patent Specification No 5,011,908. A preferred catalyst is an amine, especially a tertiary amine, catalyst. Preferred amine catalysts include an amine group substituted by at least two optionally-substituted, preferably unsubstituted, lower alkyl groups which may be the same or different, but are preferably the same. A lower alkyl group may have up to 8, preferably up to 6, more preferably up to 4, carbon atoms, with methyl and ethyl groups being especially preferred. A tertiary amine catalyst may be selected from bis(2,2'-dimethylamino)ethyl ether, trimethylamine, triethylamine, triethylenediamine, dimethylethanolamine, N,N',N'-dimethylaminopropylhexahydrotriazine and N,N-dimethylcyclohexylamine. Examples of commercially available tertiary amine catalysts are those sold under the trade names NIAX, TEGOAMIN , JEFFCAT and DABCO (all trademarks).

Said catalyst is typically used in an amount in the range of from 0 to 8 php, suitably 0.1 to 5 php. Preferred amounts of catalyst are in the range from 0.5 to 2.5 php.

The use of cross-linking agents in the production of polyurethane foams is well known. Polyfunctional alkanol amines are known to be useful for this purpose. Preferred amines which may be included in the polyol formulation to achieve, aid or maintain the miscibility of said flexible and rigid polyols include diethanolamine, often abbreviated as DEOA, and triethanolamine, often abbreviated as TEOA. If used at all, the cross-linking agent is applied in amounts up to 10 php, suitably from 0.5 to 5 php.

Blowing agents may also be included in the polyol formulation. Suitable blowing agents include water, acetone, (liquid) carbon dioxide, halogenated hydrocarbons, aliphatic alkanes and alicyclic alkanes. Due to the ozone depleting effect of the fully chlorinated, fluorinated alkanes (CFC's) the use of this type of blowing agent is generally not preferred, although it is possible to use them within the scope of the present invention. The halogenated alkanes, wherein at least one hydrogen atom has not been substituted by a halogen atom (the so called HCFC's and HFC's), have a significantly lower ozone depleting effect and therefore are the preferred halogenated hydrocarbons to be used in physically blown foams. A very suitable HCFC type blowing agent is 1-chloro-1,1-difluoroethane. The use of water as a (chemical) blowing agent is also well known. Water reacts with isocyanate groups according to the well known NCO/H₂O reaction, thereby releasing carbon dioxide which causes the blowing to occur. The aliphatic and alicyclic alkanes, finally, were developed as alternative blowing agents for the CFC's. Examples of such alkanes are butanes and pentanes (aliphatic) and cyclopentane (alicyclic). It will be understood that the above blowing agents may be used singly or in mixtures of two or more. Of the blowing agents mentioned, water giving carbon dioxide and pentane have been found to be particularly suitable as blowing agents for the purpose of the present invention. The amounts wherein the blowing agents are to be used are those conventionally applied, i.e. in the range of from 0.1 to 5 php in case of water and in the range of from about 0.1 to 20 php in case of halogenated hydrocarbons, aliphatic alkanes, alicyclic alkanes and liquid carbon dioxide.

In addition, other well known auxiliaries, such as flame retardants, foam stabilisers (surfactants) and fillers may be included in the formulation. Organosilicone surfactants are most conventionally applied as foam stabilisers in polyurethane production. A large variety of such organosilicone surfactants is commercially available. Usually, such foam stabiliser is used in an amount of up to 5% by weight based on the reaction mixture of polyol reactant and polyisocyanate reactant.

Said polyol formulation of the first aspect is very suitable for producing a polyurethane foam having a softening temperature of 115 °C or more and one which is semi-flexible.

The invention extends to a method of preparing a polyol formulation according to said first aspect which comprises mixing together said flexible polyol and said rigid polyol in the amounts indicated.

According to a second aspect, there is provided a method of preparing a polyurethane foam which is semi-flexible and has a softening temperature of 115 °C or above, which method comprises reacting a polyisocyanate component with a polyol formulation according to the first aspect of the present invention or prepared as described in the previous paragraph or reacting a polyisocyanate component with said flexible polyol and said rigid polyol simultaneously or consecutively. When reacting the polyols consecutively with the polyisocyanate the order in which said flexible polyol and said rigid polyol are reacted with the polyisocyanate is immaterial.

The method of the second aspect is suitably carried out at a temperature in the range of from 0 to 35 °C, but ambient temperature, typically in the range 20 to 25 °C, is preferred.

Polyisocyanates that may be used are those conventionally applied in the production of flexible, semi-flexible or rigid polyurethane foams. Useful polyisocyanates should contain at least two isocyanate groups and include both aliphatic (usually alkylene) and aromatic di-, tri-, tetra- and higher isocyanates known in the art to be suitably applied in the production of polyurethane foams. Mixtures of two or more of such aliphatic and/or aromatic polyisocyanates may also be applied. Examples of suitable polyisocyanates, include 2,4-toluene diisocyanate (2,4-TDI), 2,6-TDI, mixtures of 2,4-TDI and 2,6-TDI, 1,5-naphthene diisocyanate, 2,4-methoxyphenyl diisocyanate, 4,4'-diphenylmethane diisocyanate (MDI), 4,4'- biphenylene diisocyanate, 3,3'-dimethoxy-4,4'-biphenylene diisocyanate, 3,3'-dimethyl-4,4'-biphenylene diisocyanate and 3,3'-dimethyl-4,4'-diphenylmethane diisocyanate, 4,4',4"-triphenylmethane triisocyanate, 2,4,6-toluene triisocyanate, 4,4'-dimethyl-2,2',5,5'-diphenylmethane tetraisocyanate, polymethylene-polyphenylene polyisocyanate, carbodiimide modified isocyanates, MDI prepolymers and mixtures of two or more of these. Polymeric MDI, a mixture of polyisocyanates with MDI as the main component, may also be used.

The isocyanate index may be in the range 100 to 140, preferably in the range 105 to 130, more preferably in the range 105 to 120.

The flexibility of a foam may be assessed according to DIN 53423. The flexibility may be at least 10 mm, suitably at least 11 mm, preferably at least 12 mm, more preferably at least 13 mm, especially at least 14 mm. Typically, the flexibility will not exceed 25 mm and more suitably is less than 20 mm.

The softening temperature of the foam preferably is at least 120 °C and more preferably at least 125 °C. Softening temperature as referred to in this connection may conveniently be determined using a Perkin Elmer TMA7 Thermal Analysis System.

The free rise density of the foam assessed according to ISO 845 may be at least 20, preferably at least 30, more preferably at least 40, especially at least 50 kg/m³. The free rise density may be 160 or less, preferably 120 or less, more preferably 100 or less, especially 80 kg/m³ or less.

The invention extends to a method of preparing a polyurethane foam which is semi-flexible and has a softening temperature of 115 °C or above, the method including reacting a polyisocyanate component with a said flexible polyol as described above and a said rigid polyol as described above.

The polyurethane foam suitably has a virtually closed-cell structure, i.e. it has a closed cell content of at least 90% as determined in accordance with DIN 2856.

The invention further extends to a polyurethane foam which is semi-flexible, has a softening temperature of 115 °C or above and is obtainable either by reacting a polyol formulation as described herein with a polyisocyanate or by a method as described herein.

These foams suitably have an initial thermal conductivity (i.e. the thermal conductivity determined at a mean temperature of 10 °C by a heat flow meter according to ISO 8301 24 hours after preparation of the foam) of at most 30 mW/m.K, preferably at most 27 mW/m.K and more preferably at most 25 mW/m.K, while the initial thermal conductivity will generally not be less than 20 mW/m.K. Characteristic of the foams according to the present invention is that the increase of the thermal conductivity in time, starting from the initial thermal conductivity as measured one day after formation of the foam is less than 15% over a period of 29 days.

The invention extends to a shaped article comprising a polyurethane foam as described herein.

The shaped article is preferably a pipe. It preferably includes an inner pipe and a layer outside the inner pipe, which layer is preferably tubular and made of said polyurethane foam. Said layer outside suitably abuts and surrounds said inner pipe. This inner pipe may comprise a synthetic material such as cross-linked polyethylene. Preferably, however, it is made of metal, for example copper, steel or chrome-nickel. The polyurethane insulating layer may be surrounded by a casing material.

Any feature of any aspect of any invention or embodiment described herein may be combined with any feature of any other aspect of any invention or embodiment described herein.

The invention will now be described, with reference to the following examples, wherein Polyols I to V are flexible polyols and Polyol A is a rigid polyol.

In these examples, the following are referred to (PO is propylene oxide; EO is ethylene oxide):
Polyol I - a PO-EO polyether polyol, 13% EO randomly distributed and tipped, having a hydroxyl value of 62 mg KOH/g, a molecular weight of 2700 and an average nominal functionality of 3.0.
Polyol II - a PO-EO polyether polyol, 13% EO randomly distributed, having a hydroxyl value of 77 mg KOH/g, a molecular weight of 2200 and an average nominal functionality of 3.0.
Polyol III - a PO-EO polyether polyol, 13% EO randomly distributed, having a hydroxyl value of 103 mg KOH/g, a molecular weight of 1600 and an average nominal functionality of 3.0.
Polyol IV - a PO-EO polyether polyol, 14% EO tipped, having a hydroxyl value of 36 mg KOH/g, a molecular weight of 4700 and an average nominal functionality of 3.0.
Polyol V - a PO-EO polyether polyol, 13% EO randomly distributed and tipped, having a hydroxyl value of 56 mg KOH/g, a molecular weight of 3000 and an average nominal functionality of 3.0.
Polyol A - a diethanol amine/aromatic PO-based polyether polyol with a hydroxyl value of 520 mg KOH/g, a molecular weight of 318, an average nominal functionality of 3.0, an aromatic content of 16% and an amine content (expressed as a nitrogen content) of 3.6%. pbw - refers to "parts by weight".
B8404 - refers to TEGOSTAB B8404 - a silicone surfactant ex Goldschmidt (TEGOSTAB is a trademark)
SUPRASEC 5005 - polymeric MDI, equivalent weight 133.33 eq/g, average nominal functionality of 2.7 and NCO content between 30 and 32% (ex Huntsman Polyurethanes; SUPRASEC is a trademark of Huntsman ICI Chemicals LLC).
DMCHA - N,N-dimethylcyclohexylamine catalyst

### Example 1

Polyol I (45 pbw) and Polyol A (55 pbw) were mixed together with additives as described in Table 1 at ambient temperature using a mechanical stirrer (at a speed sufficient to give a homogenous mixture) and were found to be miscible, giving a clear single phase liquid.

Foams were then prepared in open polyethene bags. The components described in Table 1 were conditioned at a temperature of 21 °C and all but the MDI were mixed in a plastic beaker at a speed of 3000 r.p.m. by means of a stirrer. The MDI was added in five seconds and the mixture was stirred for another five seconds before pouring it into the plastic bag.

A piece of foam taken from the centre of the bag was sampled and tested. Table 1 records results of tests undertaken.

The closed cell content of the foam was determined in accordance with DIN 2856.

The flexibility was determined according to DIN 53423 in the rise direction as well as perpendicular to the foam rise. The value recorded is the displacement of the foam middle section at break. The results quoted are average measurements in the two directions.

The softening temperature (Ts) was determined using a Perkin Elmer TMA7 Thermal Analysis System. Measurements were performed in a helium atmosphere; a force giving a 50 kPa load was applied; and a heating rate of 10 °C/minute was used.

The free rise density (FRD) of the foams was determined according to ISO 845.

Thermal conductivity λ was measured at a mean temperature of 10 °C by a heat flow meter according to ISO 8301.

Other results provided in Table 1 were obtained using standard techniques.

### Examples 2 and 3 Comparative Examples C1 and C2

Example 1 was repeated except that different polyols were used. The formulations are listed in Table 1. The polyols were mixed and found to be miscible. The mixture was then reacted by a process analogous to that described in Example 1. Results are provided in Table 1.

From table 1 it can be seen that those formulations wherein the flexible polyol used has an OH-value between 60 and 120 mg KOH/g (i.e. the formulations containing Polyols I, II and III) result in a less rapid increase of the thermal conductivity in time than the formulations containing polyols having an OH-value below 60 mg KOH/g, which fall within the preferred range as disclosed and exemplified in WO-A-99/20672.

**Table 1**

| Semi-flexible polyurethane foams | | | | | |
|---|---|---|---|---|---|
| | Example Nos. | | | | |
| | 1 | 2 | 3 | C1 | C2 |
| Polyol I (pbw) | 45 | | | | |
| Polyol II (pbw) | | 45 | | | |
| Polyol III (pbw) | | | 45 | | |
| Polyol IV (pbw) | | | | 45 | |
| Polyol V (pbw) | | | | | 45 |
| Polyol A (pbw) | 55 | 55 | 55 | 55 | 55 |
| SUPRASEC 5005 (pbw) | 119 | 121 | 125 | 116 | 119 |
| water (pbw) | 1.9 | 1.9 | 1.9 | 1.9 | 1.9 |
| DMCHA (pbw) | 0.7 | 0.7 | 0.7 | 0.7 | 0.7 |
| B8404 (pbw) | 1.0 | 1.0 | 1.0 | 1.0 | 1.0 |
| | Properties | | | | |
| Isocyanate index | 115 | 115 | 115 | 115 | 115 |
| Closed cell content (%) | 92 | 91 | 92 | 92 | 92 |
| FRD (kg/m³) | 57.2 | 55.2 | 53.3 | 57.5 | 55.7 |
| Ts (°C) | 138 | 128 | 121 | 153 | 143 |
| Flexibility (mm) | 16 | 15 | 16 | 15 | 16 |
| λ (at 10 °C, in mW/m.K) | | | | | |
| after 1 day | 23.3 | 23.6 | 23.6 | 22.8 | 23.2 |
| after 2 days | 23.8 | 24.0 | 24.0 | 23.8 | 23.8 |
| after 4 days | 23.9 | 24.1 | 24.1 | 24.3 | 24.1 |
| after 7 days | 24.2 | 24.3 | 24.4 | 25.0 | 24.4 |
| after 10 days - | 24.3 | 24.5 | 24.5 | 25.8 | 24.7 |
| after 14 days | 24.7 | 24.7 | 24.7 | 27.1 | 25.1 |
| after 23 days | 25.6 | 25.4 | 25.2 | 30.0 | 26.3 |
| after 30 days | 26.6 | 26.1 | 25.8 | 31.3 | 27.5 |
| λ increase over 29 days | 14% | 11% | 9% | 37% | 19% |

## Claims

1. A polyol formulation comprising 30 to 55 wt% of a polyol of a flexible type having a number average molecular weight in the range of from 1100 to 3800, a hydroxyl value in the range of from 60 to 120 mg KOH/g and an ethylene oxide content of less than 75 wt% and 45 to 70 wt% of a polyol of a rigid type having a number average molecular weight of less than 1000 and a hydroxyl value of greater than 300 mg KOH/g.

2. A formulation according to claim 1, wherein said flexible polyol has a molecular weight in the range of 1200 to 3500 and a hydroxyl value in the range of 60 to 110 mg KOH/g.

3. A formulation according to claim 1 or claim 2, wherein said flexible polyol has a functionality of at least 2.2.

4. A formulation according to any one of the preceding claims, wherein said flexible polyol has an ethylene oxide content of less than 40 wt%.

5. A formulation according to any one of the preceding claims, comprising from 35 to 50 wt% of said flexible polyol and, up to a total of 100 wt%, from 50 to 65 wt% of said rigid polyol.

6. A formulation according to any one of the preceding claims, wherein said rigid polyol has an amine content (expressed in terms of the percentage of N) of at least 0.2 wt%.

7. A method of preparing a polyol formulation which comprises mixing together 30 to 55 wt% of polyol of a flexible type having a number average molecular weight in the range of from 1100 to 3800, a hydroxyl value in the range of from 60 to 120 mg KOH/g and an ethylene oxide content of less than 75 wt% and 45 to 70 wt% of a polyol of a rigid type having a number average molecular weight of less than 1000 and a hydroxyl value of greater than 300 mg KOH/g.

8. A method of preparing a polyurethane foam, the method including reacting a polyisocyanate component with a polyol formulation as defined in any of claims 1 to 6 or prepared as defined in claim 7 or with said flexible polyol and said rigid polyol as defined in any of claims 1 to 6 simultaneously or consecutively.

9. A polyurethane foam obtainable either by reacting a polyol formulation as defined in any of claims 1 to 6 or prepared by a method as defined in claim 7 with a polyisocyanate or by a method as defined in claim 8.

10. A shaped article comprising a polyurethane foam as defined in claim 9.

11. A shaped article as defined in claim 10, which article is a pipe, wherein the polyurethane foam is present as insulating material.

## Patentansprüche

1. Eine Polyolformulierung, die 30 bis 55 Gew.-% eines Polyols eines flexiblen Typs mit einem zahlenmittleren Molekulargewicht im Bereich von 1100 bis 3800, einem Hydroxylwert im Bereich von 60 bis 120 mg KOH/g und einem Ethylenoxidgehalt von weniger als 75 Gew.-% und 45 bis 70 Gew.-% eines Polyols eines starren Typs mit einem zahlenmittleren Molekulargewicht von weniger als 1000 und einem Hydroxylwert von größer als 300 mg KOH/g umfasst.

2. Eine Formulierung gemäß Anspruch 1, wobei das flexible Polyol ein Molekulargewicht im Bereich von 1200 bis 3500 und einen Hydroxylwert im Bereich von 60 bis 110 mg KOH/g hat.

3. Eine Formulierung gemäß Anspruch 1 oder Anspruch 2, wobei das flexible Polyol eine Funktionalität von wenigstens 2.2 hat.

4. Eine Formulierung gemäß einem der vorhergehenden Ansprüche, wobei das flexible Polyol einen Ethylenoxidgehalt von weniger als 40 Gew.-% hat.

5. Eine Formulierung gemäß einem der vorhergehenden Ansprüche, die 35 bis 50 Gew.-% des flexiblen Polyols und, bis auf eine Gesamtmenge von 100 Gew.-%, 50 bis 65 Gew.-% des starren Polyols umfasst.

6. Eine Formulierung gemäß einem der vorhergehenden Ansprüche, wobei das starre Polyol einen Amingehalt (ausgedrückt in Einheiten des Prozentsatzes an N) von wenigstens 0.2 Gew.-% hat.

7. Ein Verfahren zur Herstellung einer Polyolformulierung, welche das Zusammenmischen von 30 bis 55 Gew.-% des Polyols eines flexiblen Typs, das einzahlenmittleres Molekulargewicht im Bereich von 1100 bis 3800, ein Hydroxylwert im Bereich von 60 bis 120 mg KOH/g und einen Ethylenoxidgehalt von weniger als 75 Gew.-% hat, und 45 bis 70 Gew.-% eines Polyols eines starren Typs, das ein zahlenmittleres Molekulargewicht von weniger als 1000 und einen Hydroxylwert größer als 300 mg KOH/g hat, umfasst.

8. Ein Verfahren zur Herstellung eines Polyurethan-Schaumstoffs, wobei das Verfahren das Umsetzen einer Polyisocyanat-Komponente mit einer Polyolformulierung wie in einem der Ansprüche 1 bis 6 definiert oder hergestellt wie in Anspruch 7 definiert, oder mit dem flexiblen Polyol und dem starren Polyol wie in einem der Ansprüche 1 bis 6 definiert simultan oder nacheinander einschließt.

9. Ein Polyurethan-Schaumstoff, erhältlich entweder durch Umsetzen einer Polyolformulierung wie in einem der Ansprüche 1 bis 6 definiert oder durch ein Verfahren wie in Anspruch 7 definiert hergestellt mit einem Polyisocyanat oder nach einem Verfahren wie in Anspruch 8 definiert.

10. Ein Formgegenstand, der einen Polyurethan-Schaumstoff wie in Anspruch 9 definiert umfasst.

11. Ein Formgegenstand wie in Anspruch 10 definiert, wobei der Gegendstand ein Rohr ist, worin der Polyurethan-Schaumstoff als Isoliermaterial vorliegt.

## Revendications

1. Formulation de polyols comprenant 30 à 55 % en poids d'un polyol de type flexible ayant une moyenne en nombre du poids moléculaire comprise dans l'intervalle de 1100 à 3800, un indice d'hydroxyle compris dans l'intervalle de 60 à 120 mg de KOH/g et une teneur en oxyde d'éthylène inférieure à 75 % en poids et 45 à 70 % en poids d'un polyol de type rigide ayant une moyenne en nombre du poids moléculaire inférieure à 1000 et un indice d'hydroxyle supérieur à 300 mg de KOH/g.

2. Formulation suivant la revendication 1, dans laquelle ledit polyol flexible a un poids moléculaire compris dans l'intervalle de 1200 à 3500 et un indice d'hydroxyle compris dans l'intervalle de 60 à 110 mg de KOH/g.

3. Formulation suivant la revendication 1 ou la revendication 2, dans laquelle ledit polyol flexible a une fonctionnalité d'au moins 2,2.

4. Formulation suivant l'une quelconque des revendications précédentes, dans laquelle ledit polyol flexible a une teneur en oxyde d'éthylène inférieure à 40 % en poids.

5. Formulation suivant l'une quelconque des revendications précédentes, comprenant 35 à 50 % en poids dudit polyol flexible et, jusqu'à un total de 100 % en poids, 50 à 65 % en poids dudit polyol rigide.

6. Formulation suivant l'une quelconque des revendications précédentes, dans laquelle ledit polyol rigide a une teneur en amine (exprimée en termes de pourcentage de N) d'au moins 0,2 % en poids.

7. Procédé pour la préparation d'une formulation de polyols, qui comprend l'étape consistant à mélanger ensemble 30 à 55 % en poids d'un polyol de type flexible ayant une moyenne en nombre du poids moléculaire comprise dans l'intervalle de 1100 à 3800, un indice d'hydroxyle compris dans l'intervalle de 60 à 120 mg de KOH/g et une teneur en oxyde d'éthylène inférieure à 75 % en poids et 45 à 70 % en poids d'un polyol de type rigide ayant une moyenne en nombre du poids moléculaire inférieure à 1000 et un indice d'hydroxyle supérieur à 300 mg de KOH/g.

8. Procédé pour la préparation d'une mousse de polyuréthanne, procédé comprenant la réaction d'un constituant polyisocyanate avec une formulation de polyols répondant à la définition suivant l'une quelconque des revendications 1 à 6 ou préparée de la manière définie dans la revendication 7 ou avec ledit polyol flexible et ledit polyol rigide définis dans l'une quelconque des revendications 1 à 6 simultanément ou successivement.

9. Mousse de polyuréthanne pouvant être obtenue en faisant réagir une formulation de polyols répondant à la définition suivant l'une quelconque des revendications 1 à 6 ou préparée par un procédé répondant à la définition suivant la revendication 7 avec un polyisocyanate ou par un procédé répondant à la définition suivant la revendication 8.

10. Article façonné comprenant une mousse de polyuréthanne répondant à la définition suivant la revendication 9.

11. Article façonné répondant à la définition suivant la revendication 10, article qui est un conduit, dans lequel la mousse de polyuréthanne est présente comme matériau isolant.
